Europäisches Patentamt

European Patent Office

Office européen des brevets

(19)

(11) **EP 0 794 872 B1**

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(21) Anmeldenummer: 95940214.0

(22) Anmeldetag: 20.11.1995

(51) Int. Cl.$^6$: **B60B 17/00**

(86) Internationale Anmeldenummer:
**PCT/EP95/04561**

(87) Internationale Veröffentlichungsnummer:
**WO 96/18512 (20.06.1996 Gazette 1996/28)**

(54) **SPANNUNGSHOMOGENISIERTES SCHIENENRAD MIT EINER RADNABE UND RADKRANZ VERBINDENDEN RADSCHEIBE**

STRESS-HOMOGENISED TRACK WHEEL WITH A WHEEL DISK CONNECTING THE WHEEL HUB AND WHEEL RIM

ROUE A CONTRAINTES UNIFORMISEES POUR RAIL POURVUE D'UN DISQUE DE ROUE RELIANT LE MOYEU A LA JANTE

(84) Benannte Vertragsstaaten:
**AT CH ES FR GB IT LI SE**

(30) Priorität: **10.12.1994 DE 4444077**

(43) Veröffentlichungstag der Anmeldung:
**17.09.1997 Patentblatt 1997/38**

(73) Patentinhaber:
**VSG Verkehrstechnik GmbH
44793 Bochum (DE)**

(72) Erfinder:
• **MURAWA, Franz
  D-44805 Bochum (DE)**
• **SCHNEIDER, Jürgen
  D-44807 Bochum (DE)**
• **BITTNER, Wilfried
  D-45525 Hattingen (DE)**

(74) Vertreter: **Cohausz & Florack
Patentanwälte
Kanzlerstrasse 8a
40472 Düsseldorf (DE)**

(56) Entgegenhaltungen:
| | |
|---|---|
| EP-A- 0 111 212 | EP-A- 0 638 444 |
| DE-A- 2 346 144 | DE-B- 1 275 568 |
| DE-B- 2 331 738 | GB-A-  750 713 |

**Beschreibung**

Die Erfindung bezieht sich auf ein Schienenrad mit einer Radnabe und Radkranz verbindenden Radscheibe, die eine von der Radnabe zum Radkranz abnehmende Dicke hat und deren Außenseiten über Korbbögen als radial verlaufende Erzeugende in die benachbarten Außenseiten der Radnabe und des Radkranzes tangential übergehen.

Ein derartiges Schienenrad ist z.B. aus der DE-B-2 331 738 bekannt.

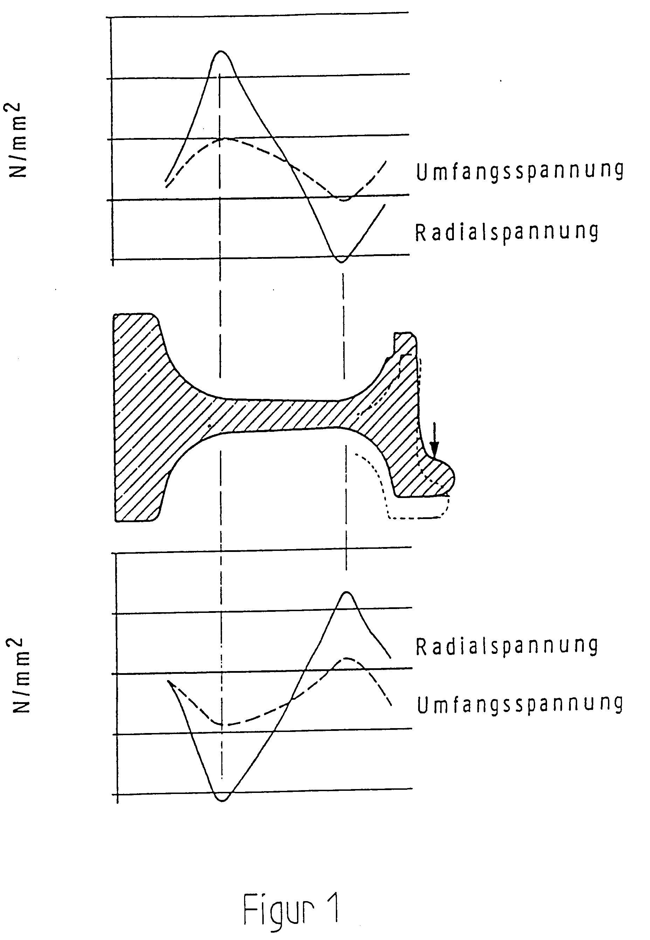

Die Hauptbeanspruchung scheibengebremster Schienenräder der eingangs genannten Art tritt in den Übergangsbereichen der Radscheibe in den Radkranz und die Radnabe infolge der im Fahrbetrieb zwischen Rad und Schiene wirkenden Kräfte auf. Diese Spannungen konzentrieren sich nur auf einen kleinen Bereich und fallen dann sehr schnell ab. Ein typischer Spannnngsverlauf für ein herkömmliches Rad zeigt Figur 1 (ERRI/ORE-Bericht B136/RP9 des Forschungs- und Versuchsamtes der Europäischen Eisenbahnen). Durch diese Spannungskonzentrationen auf kleine Bereiche wird der Werkstoff hier bis an seine Dauerfestigkeitsgrenze belastet, während benachbarte Bereiche nur noch gering belastet werden. In diesen geringer belasteten Bereichen ist also das Rad überdimensioniert.

Aus der DE-A-2 346 144 ist ein Leichtradsatz für Schienenradfahrzeuge bekannt, der Radscheiben aus Leichtmetall und Stahlbandagen aufweist, wobei die Radscheibe auf die Nabe und die Stahlbandage auf die Radscheibe jeweils aufgeschrumpft sind. An diesem Leichtradsatz ist zur Spannungsverminderung unter anderem eine Metallverklebung von Radscheibe und Radsatzwelle sowie von Stahlbandage und Radscheibe vorgesehen. Ferner ist die Radscheibe mit geradem Steg ausgeführt, um die bei gewellten Radscheiben auftretenden Spannungsspitzen zu vermeiden.

Der Erfindung liegt die Aufgabe, zugrunde, ein Schienenrad der eingangs genannten Art zu schaffen, bei dem örtliche Spannungskonzentrationen im Vergleich zu einem herkömmlichen Rad abgebaut sind.

Diese Aufgabe wird erfindungsgemäß bei einem Schienenrad der eingangs genannten Art dadurch gelöst, daß die beiden Seiten der Radscheibe zumindest im radialen Mittenbereich geometrisch durch gerade, radial verlaufende Erzeugenden bestimmt sind, die sich im Bereich zwischen den Korbbögen am Radkranz schneiden.

Durch diese Formgebung des Schienenrades treten keine Spannungsspitzen an örtlich engbegrenzten Bereichen auf. Die Spannungen sind über größere Bereiche verteilt und in der Spitze abgebaut. Die erfindungsgemäße Formgebung führt deshalb zu einem optimalen Leichtbau.

Die Radscheibenmittelebene liegt vorzugsweise senkrecht zur Radachse. Sie kann aber auch unter einem Winkel von bis zu 5° geneigt zur Radachse liegen.

Durch weitere Maßnahmen kann das Rad im Sinne der Aufgabenstellung weiter verbessert werden.

Beim Schmieden und Walzen des Rades ist es aus Fertigungsgründen vorteilhaft, wenn die der Radscheibe benachbarten Außenseiten der Radnabe konisch sind, wobei der Schnittpunkt der geraden Erzeugenden dieser Außenseiten den Fußpunkt der Radscheibe an der Radnabe bestimmt. In entsprechender Weise können die der Radscheibe benachbarten Außenseiten des Radkranzes konisch sein, wobei der Schnittpunkt der geraden Erzeugenden dieser Außenseiten den Fußpunkt der Radscheibe am Radkranz bestimmt.

Für den Abbau von Spannungsspitzen hat sich als vorteilhaft erwiesen, wenn die Radscheibe ihre kleinste Dicke im Bereich von 2/3 bis 4/5 des Abstandes ihres Fußpunktes an der Radnabe hat. Optimal ist es, wenn die Radscheibe ihre kleinste Dicke in einem Abstand

$$C \approx 1{,}67\,\frac{D}{LD} \cdot B$$

(mit D = Abstand des Fußpunktes der Radscheibe von der Radachse, B = Abstand der Fußpunkte der Radscheibe und LD = Laufkreisdurchmesser) von dem Fußpunkt der Radscheibe an der Radnabe hat.

Der axiale Abstand der geraden Erzeugenden der Außenseite der Radscheibe am Fußpunkt der Radnabe kann durch die Formel

$$A \approx 15 + 8{,}5\,(f_D + f_F)$$

mit den Korrekturfaktoren $f_D$ = LD : 920 für den Laufkreisdurchmesser LD und $f_F$ = Q : 500 + Y : 120 für die Radkraft Q (radiale Achsbelastung) und die Schienenkraft Y (axiale Kraft am Spurkranz) bestimmt werden.

Die Übergänge setzen sich in der Regel aus verschiedenen Bereichen zusammen. Vorzugsweise erstreckt sich der radscheibenseitige Übergangsbereich von der Radnabe und/oder dem Radkranz in die Radscheibe über eine radiale Breite

$$E, F \approx 0{,}35\ B$$

der Radscheibe, gemessen von den jeweiligen Fußpunkten der Radscheibe, mit einem Abstand B der Fußpunkte der Radscheibe. Der radscheibenseitige Übergangsbereich von der Radnabe zur Radscheibe wird durch die Funktion bestimmt

$$Y_1 = E \, (2{,}292 \cdot 10^{-10} X_1^5 - 4{,}229 \cdot 10^{-8} X_1^4 + 2{,}930 \cdot 10^{-6} X_1^3 - 8{,}646 \cdot 10^{-5} X_1^2 + 1{,}070 \cdot 10^{-3} X_1).$$

Der radscheibenseitige Übergangsbereich von dem Radkranz zur Radscheibe wird durch folgende Funktion bestimmt

$$Y_2 = F \, (4{,}870 \cdot 10^{-10} X_2^5 - 9{,}292 \cdot 10^{-8} X_2^4 + 6{,}229 \cdot 10^{-6} X_2^3 - 1{,}561 \cdot 10^{-4} X_2^2 + 1{,}656 \cdot 10^{-3} X_2).$$

Der sich an diese Übergangsbereiche anschließende Bereich von der Radscheibe in die Radnabe hat vorzugsweise einen Krümmungsradius

$$G = 1{,}25 \text{ bis } 2{,}5 \cdot A,$$

(wobei A axialer Abstand der Erzeugenden der Außenseiten der Radscheibe am Fußpunkt an der Radnabe ist).

In entsprechender Weise sollte der radkranzseitige Übergangsbereich von der Radscheibe in den Radkranz einen Krümmungsradius

$$H = 0{,}75 \text{ bis } 2{,}0 \cdot A$$

(wobei A axialer Abstand der Erzeugenden der Außenseiten der Radscheibe am Fußpunkt an der Radnabe ist), haben.

Im folgenden wird die Erfindung anhand einer ein Ausführungsbeispiel darstellenden Zeichnung näher erläutert. Im einzelnen zeigen:

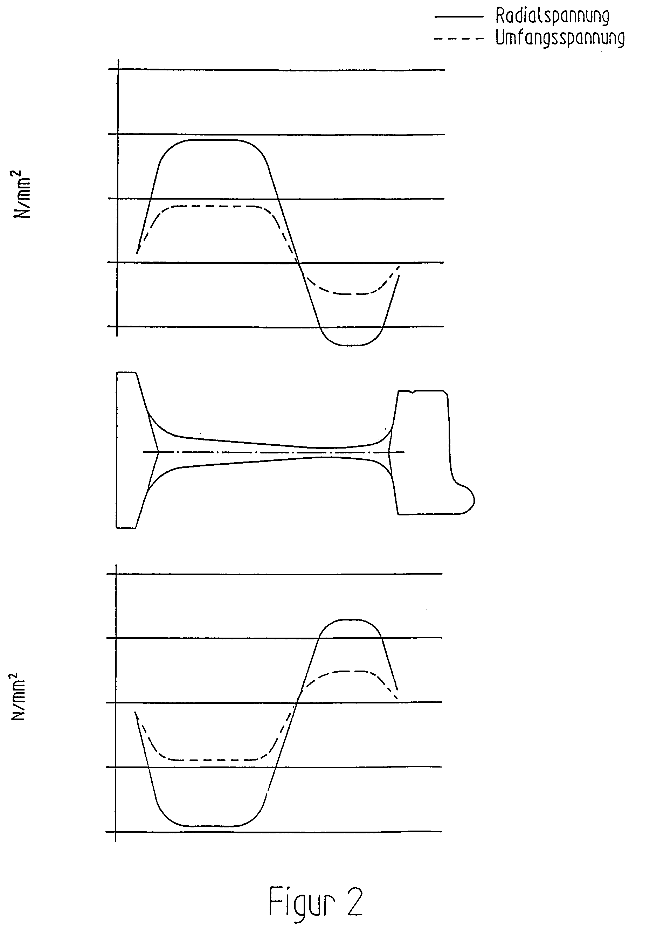

Figur 2    ein Schienenrad im halben Axialschnitt mit Spannungsdiagrammen für die Radialspannung und die Umfangsspannung (Tangentialspannung) für die beiden Seiten der Radscheibe,

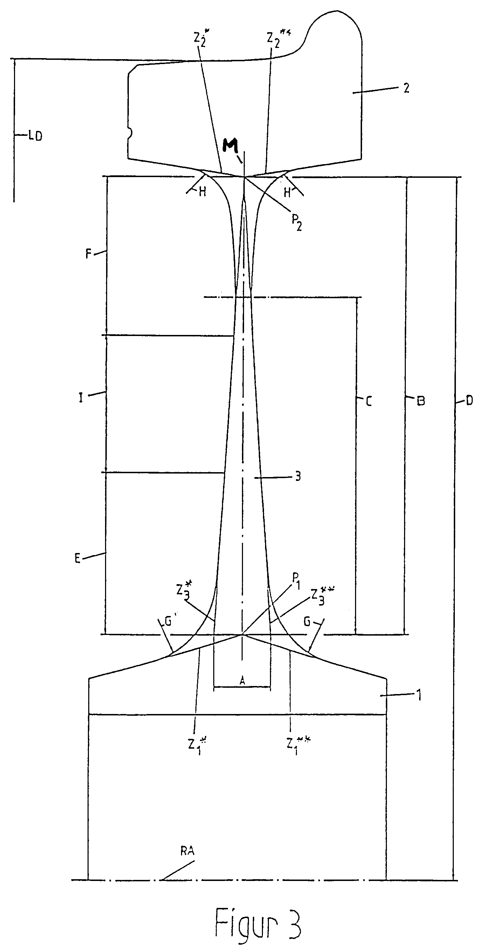

Figur 3    das Schienenrad gemäß Figur 2 in vergrößerter Darstellung im Halbschnitt,

Figur 4    Radnabe und Radkranz des Schienenrades gemäß Figur 2 und 3 für verschiedene Neigungen der Radscheibenmittelebene,

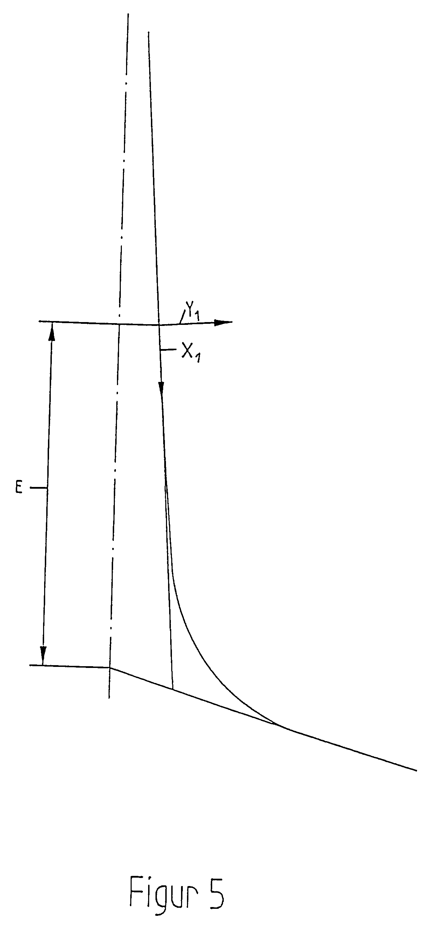

Figur 5    den Übergangsbereich von der Radnabe in die Radscheibe bei einem Schienenrad gemäß Figur 2 und 3 in vergrößerter Darstellung
**und**

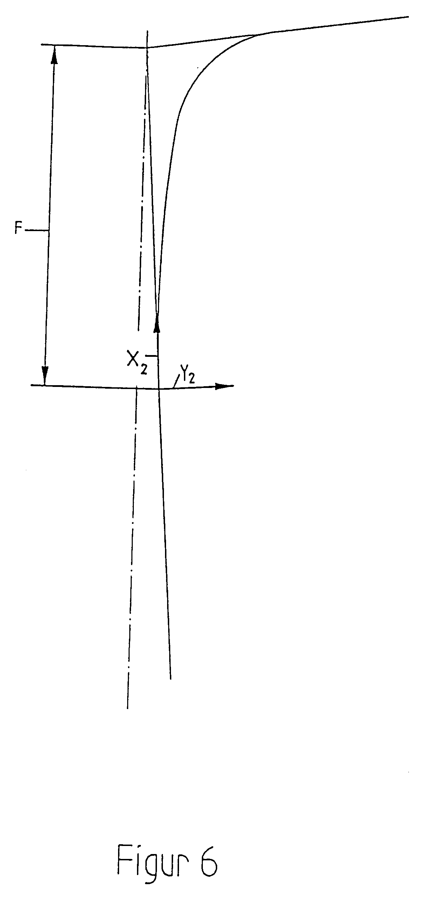

Figur 6    den Übergangsbereich von dem Radkranz in die Radscheibe bei einem Schienenrad gemäß Figur 2 und 3 in vergrößerter Darstellung.

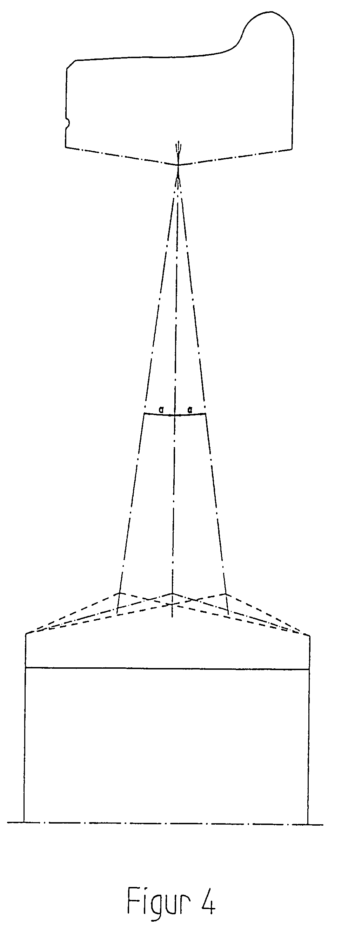

Das Schienenrad ist als Vollrad ausgebildet und besteht aus einer Radnabe 1, einem Radkranz 2 und einer Radscheibe 3. Die Radscheibe 3 steht mit ihrer Mittelebene M senkrecht auf der Radachse RA. Bezüglich dieser Mittelebene M sind ihre Außenseiten symmetrisch und gehen über Korbbögen tangential in die Außenseiten der Radnabe 1 und des Radkranzes 2 über. Gemäß Figur 4 kann die Mittelebene M aber auch um einen Winkel $\alpha$ +/- 5° geneigt sein.
Die radscheibenseitigen Außenseiten der Radnabe 1 und des Radkranzes 2 sind konisch. Ihre geraden Erzeugenden Z1*, Z1**, Z2*, Z2** schneiden sich in einem Punkt $P_1, P_2$ auf der Mittelebene M, der den jeweiligen Fußpunkt der Radscheibe 3 an der Radnabe 1 und dem Radkranz 2 bildet. Die Außenseiten der Radscheibe 3 werden im mittleren Bereich E von radial verlaufenden geraden Erzeugenden Z3*, Z3** bestimmt, die am radnabenseitigen Fußpunkt $P_1$ einen axialen Abstand A haben und sich radkranzseitig zwischen den Übergangsbereichen, insbesondere im radkranzseitigen Fußpunkt $P_2$, schneiden.
Die Radscheibe 3 hat im Abstand C vom radnabenseitigen Fußpunkt $P_1$ eine kleinste Dicke. Der Abstand C beträgt 2/3 bis 4/5 des Abstandes B der Fußpunkte $P_1, P_2$. Vorzugsweise ist der Abstand

$$C \approx 1,67 \, \frac{D}{LD} \cdot B$$

wobei D der Abstand des Fußpunktes $P_2$ von der Radachse RA und LD der Laufkreisdurchmesser des Rades sind.

Der mittlere Bereich I mit den radialen geraden Erzeugenden Z3*,Z3** der Radscheibe 3 erstreckt sich in einem Abstand

$$E \approx 0,35 \cdot B$$

vom Fußpunkt $P_1$ bis zu einem Abstand

$$F \approx 0,35 \cdot B$$

vom Fußpunkt $P_2$. Der Abstand B der Fußpunkte $P_1$,$P_2$ ist in gewissen Grenzen unter Berücksichtigung der Konstruktionsregeln für die Radnabe 1, den Radkranz 2 und den Laufkreisdurchmesser LD frei wählbar.

Die Korbbögen für die Übergänge der Radscheibe 3 in die Radnabe 1 beziehungsweise in den Radkranz 2 setzen sich aus zwei Abschnitten mit unterschiedlichen Funktionen zusammen. So beträgt der Krümmungradius G im radnabennahen Abschnitt

$$G = 1,25 \text{ bis } 2,5 \cdot A,$$

während der Krümmungsradius für den radkranznahen Bereich

$$H = 0,75 \text{ bis } 2,0 \cdot A$$

beträgt. Daran schließen sich die Bereiche E und F an, die folgenden Funktionen genügen

$$Y_1 = E \, (2,292 \cdot 10^{-10} X_1^5 - 4,229 \cdot 10^{-8} X_1^4 + 2,930 \cdot 10^{-6} X_1^3 - 8,646 \cdot 10^{-5} X_1^2 + 1,070 \cdot 10^{-3} X_1)$$

$$Y_2 = F \, (4,870 \cdot 10^{-10} X_2^5 - 9,292 \cdot 10^{-8} X_2^4 + 6,229 \cdot 10^{-6} X_2^3 - 1,561 \cdot 10^{-4} X_2^2 + 1,656 \cdot 10^{-3} X_2)$$

Obgleich die Erfindung am Ausführungsbeispiel eines Vollrades mit einem einstückigen Radkranz 2 erläutert ist, ist sie auch bei anderen Schienenrädern, wie einem wiederbereifbaren Vollrad oder einem gummigefederten Rad mit Vorteil anwendbar.

**Patentansprüche**

1.   Schienenrad mit einer Radnabe (1) und Radkranz (2) verbindenden Radscheibe (3), die eine von der Radnabe (1) zum Radkranz (2) abnehmende Dicke hat und deren Außenseiten über Korbbögen als radial verlaufende Erzeugende in die benachbarten Außenseiten der Radnabe (1) und des Radkranzes (2) tangential übergehen, **dadurch gekennzeichnet,** daß die beiden Außenseiten der Radscheibe (3) im radialen Mittelbereich (I) geometrisch durch radial verlaufende, gerade Erzeugende (Z3*,Z3**) bestimmt sind, die sich im Bereich zwischen den Korbbögen am Radkranz (2) schneiden.

2.   Schienenrad nach Anspruch 1, **dadurch gekennzeichnet,** daß die Mittelebene (M) der Radscheibe (3) zur Radachse (RA) senkrecht liegt.

3.   Schienenrad nach Anspruch 1, **dadurch gekennzeichnet,** daß die Mittelebene (M) der Radscheibe (3) gegenüber der Radachse (RA) bis zu einem maximalen Winkel $\alpha$ gleich 5° geneigt ist.

4.   Schienenrad nach einem der Ansprüche 1 bis 3, **dadurch gekennzeichnet,** daß die der Radscheibe (3) benachbarten Außenseiten der Radnabe (1) konisch sind, wobei der Schnittpunkt ($P_1$) der geraden Erzeugenden (Z1*,Z1**) dieser Außenseiten den Fußpunkt ($P_1$) der Radscheibe (3) an der Radnabe (1) bestimmt.

5. Schienenrad nach einem der Ansprüche 1 bis 4,
   **dadurch gekennzeichnet,** daß die der Radscheibe (3) benachbarten Außenseiten des Radkranzes konisch sind, wobei der Schnittpunkt der geraden Erzeugenden dieser Außenseiten den Fußpunkt ($P_2$) der Radscheibe (3) am Radkranz (2) bestimmt.

6. Schienenrad nach einem der Ansprüche 1 bis 5,
   **dadurch gekennzeichnet,** daß die Radscheibe (3) ihre kleinste Dicke im Bereich von 2/3 bis 4/5 des Abstandes (C) ihres Fußpunktes ($P_1$) an der Radnabe (1) hat.

7. Schienenrad nach Anspruch 6,
   **dadurch gekennzeichnet,** daß der Abstand C = 1,67 x D : LD x B beträgt, wobei D der Abstand des Fußpunktes $P_2$ der Radscheibe (3) am Radkranz (2) von der Radachse (RA) und B der Abstand der Fußpunkte ($P_1,P_2$) der Radscheibe (3) und LD der Laufkreisdurchmesser sind.

8. Schienenrad nach einem der Ansprüche 1 bis 7,
   **dadurch gekennzeichnet,** daß der axiale Abstand (A) der geraden Erzeugenden (Z3*,Z3**) der Außenseiten der Radscheibe (3) am Fußpunkt ($P_1$) der Radnabe (1) durch die Formel bestimmt wird A $\approx 15 + 8,5$ ($f_D + f_F$) mit den Korrekturfaktoren $f_D$ = LD : 920 für den Laufkreisdurchmesser LD und $f_F$ = Q : 500 + Y : 120 für die Radkraft (Q) (axiale Achsbelastung) und die Schienenkraft (Y) (axiale Kraft am Spurkranz).

9. Schienenrad nach einem der Ansprüche 1 bis 8,
   **dadurch gekennzeichnet,** daß der radscheibenseitige Übergangsbereich von der Radnabe (1) und/oder dem Radkranz (2) in die Radscheibe (3) sich über eine radiale Breite E,F $\approx 0,35$ B der Radscheibe (3), gemessen von den jeweiligen Fußpunkten ($P_1,P_2$) der Radscheibe (3), mit einem Abstand (B) der Fußpunkte ($P_1,P_2$) der Radscheibe (3) erstreckt.

10. Schienenrad nach einem der Ansprüche 1 bis 9,
    **dadurch gekennzeichnet,** daß der radnabenseitige Übergangsbereich von der Radscheibe (3) in die Radnabe einen Krümmungsradius G = 1,25 bis 2,5 · A hat, wobei A der Abstand der geraden Erzeugenden (Z3*,Z3**) am Fußpunkt ($P_1$) ist.

11. Schienenrad nach einem der Ansprüche 1 bis 10,
    **dadurch gekennzeichnet,** daß der radkranzseitige Übergangsbereich von der Radscheibe (3) in den Radkranz (2) einen Krümmungsradius H = 0,75 bis 2,0 · A hat, wobei A der Abstand der geraden Erzeugenden (Z3*,Z3**) am Fußpunkt ($P_1$) ist.

12. Schienenrad nach Anspruch 1 und 9 und gegebenenfalls einem oder mehreren der Ansprüche 2 bis 8, 10, 11,
    **dadurch gekennzeichnet,** daß der radscheibenseitige Übergangsbereich von der Radscheibe (3) in die Radnabe (1) der Funktion genügt

$$Y_1 = E\,(2{,}292 \cdot 10^{-10} X_1^5 - 4{,}229 \cdot 10^{-8} X_1^4 + 2{,}930 \cdot 10^{-6} X_1^3 - 8{,}646 \cdot 10^{-5} X_1^2 + 1{,}070 \cdot 10^{-3} X_1).$$

13. Schienenrad nach Anspruch 1 und 9 und gegebenenfalls einem oder mehreren der Ansprüche 2 bis 8, 10 bis 12,
    **dadurch gekennzeichnet,** daß der radscheibenseitige Übergangsbereich von der Radscheibe (3) in den Radkranz (2) der Funktion genügt

$$Y_2 = F\,(4{,}870 \cdot 10^{-10} X_2^5 - 9{,}292 \cdot 10^{-8} X_2^4 + 6{,}229 \cdot 10^{-6} X_2^3 - 1{,}561 \cdot 10^{-4} X_2^2 + 1{,}656 \cdot 10^{-3} X_2).$$

**Claims**

1. A rail wheel having a wheel disc (3) which connects a wheel hub (1) and a wheel rim (2) and which has a thickness decreasing from the wheel hub (1) to the wheel rim (2) and whose outer sides merge tangentially via compound curves as radially extending generatrices into the adjacent outer sides of the wheel hub (1) and the wheel rim (2), characterized in that the two outer sides of the wheel disc (3) are determined geometrically in the radial central zone (I) by radially extending straight generatrices (Z3*, Z3**) which intersect one another on the wheel rim (2) in the zone between the compound curves.

2. A rail wheel according to claim 1,
   characterized in that the central plane (M) of the wheel disc (3) lies perpendicularly to the wheel axis (RA).

3. A rail wheel according to claim 1,
   characterized in that the central plane (M) of the wheel disc (3) is inclined in relation to the wheel axis (RA) up to a maximum angle $\alpha$ of 5°.

4. A rail wheel according to one of claims 1 to 3,
   characterized in that the outer sides of the wheel hub (1) adjacent the wheel disc (3) are conical, the intersecting point ($P_1$) of the straight generatrices ($Z1^*$, $Z1^{**}$) of said outer sides determining the foot ($P_1$) of the wheel disc (3) on the wheel hub (1).

5. A rail wheel according to one of claims 1 to 4,
   characterized in that the adjacent outer sides of the wheel rim adjacent the wheel disc (3) are conical, the intersecting point of the straight generatrices of said outer sides determining the foot ($P_2$) of the wheel disc (3) on the wheel rim (2).

6. A rail wheel according to one of claims 1 to 5,
   characterized in that the wheel disc (3) has its minimum thickness in the range 2/3 to 4/5 of the distance (C) of its foot ($P_1$) on the wheel hub (1).

7. A rail wheel according to claim 6,
   charcterized in that the distance amounts to (C = 1.67 x D): LD x B , where D is the distance of the foot ($P_2$) of the wheel disc (3) on the wheel rim (2) from the wheel axis (RA), and B is the distance of the feet ($P_1$, $P_2$) of the wheel disc (3) and LD is the running circle diameter.

8. A rail wheel according to one of claims 1 to 7,
   characterized in that axial distance (A) of the straight generatrices ($Z3^*$, $Z3^{**}$) on the outer sides of the wheel disc (3) at the foot ($P_1$) of the wheel hub (1) is determined by the formula $A \approx 15 + 8.5\,(f_D + f_F)$ with the correctional factors $f_D = LD : 920$ for the running circle diameter LD and $f_F = Q : 500 + Y : 120$ for the wheel force (Q) (axial axle loading) and the rail force (Y) (axial force) at the wheel rim.

9. A rail wheel according to one of claims 1 to 8,
   characterized in that the wheel disc side transition zone from the wheel hub (1) and/or the wheel rim (2) to the wheel disc (3) extends over a radial width E, $F \approx 0.35\,B$ of the wheel disc (3), measured from the particular feet ($P_1$, $P_2$) of the wheel disc (3), with a distance (B) of the feet ($P_1$, $P_2$) of the wheel disc (3).

10. A rail wheel according to one of claims 1 to 9,
    characterized in that the wheel hub side transition zone from the wheel disc (3) to the wheel hub has a radius of curvature $G = 1.25$ to $2.5 \cdot A$ , where A is the distance of the straight generatrices ($Z3^*$, $Z3^{**}$) at the foot ($P_1$).

11. A rail wheel according to one of claims 1 to 10,
    characterized in that the wheel rim side transition zone from the wheel disc (3) to the wheel rim (2) has a radius of curvature $H = 0.75$ to $2.0 \cdot A$ , where A is the distance of the straight generatrices ($Z3^*$, $Z3^{**}$) at the foot ($P_1$).

12. A rail wheel according to claims 1 and 9 and possibly one or more of claims 2 to 8, 10, 11,
    characterized in that the wheel disc side transition zone from the wheel disc (3) to the wheel hub (1) satisfies the function

$$Y_1 = E(2,292 \cdot 10^{-10} x_1^5 - 4,229 \cdot 10^{-8} X_1^4 + 2,930 \cdot 10^{-6} X_1^3 - 8,646 \cdot 10^{-5} X_1^2 + 1,070 \cdot 10^{-3} X_1).$$

13. A rail wheel according to claims 1 and 9 and if necessary one or more of claims 2 to 8, 10 to 12,
    characterized in that the wheel disc side transition zone from the wheel disc (3) to the wheel rim (2) satisfies the function

$$Y_2 = F(4,870 \cdot 10^{-10} X_2^5 - 9,292 \cdot 10^{-8} X_2^4 + 6,229 \cdot 10^{-6} X_2^3 - 1,561 \cdot 10^{-4} X_2^2 + 1,656 \cdot 10^{-3} X_2).$$

**Revendications**

1. Roue de véhicule ferroviaire, comprenant un voile de roue (3) qui relie un moyeu (1) et une jante (2), dont l'épaisseur décroît du moyeu (1) à la jante (2) et dont les côtés extérieurs, constitués de génératrices s'étendant radialement, rejoignent tangentiellement, par l'intermédiaire de courbes en anse de panier, les côtés extérieurs adjacents du moyeu (1) et de la jante (2), caractérisée en ce que les deux côtés extérieurs du voile (3), dans leur région (I) radialement intermédiaire, sont définis géométriquement par des génératrices rectilignes (Z3*,Z3**) s'étendant radialement, qui se rencontrent au niveau de la jante (2), dans la région située entre les courbes en anse de panier.

2. Roue de véhicule ferroviaire selon la revendication 1, caractérisée en ce que le plan médian (M) du voile (3) est perpendiculaire à l'axe (RA) de la roue.

3. Roue de véhicule ferroviaire suivant la revendication 1, caractérisée en ce que le plan médian (M) du voile (3) est incliné sur l'axe de la roue (RA) d'un angle au plus égal à un angle maximal $\alpha$ égal à 5°.

4. Roue de véhicule ferroviaire suivant l'une des revendications 1 à 3, caractérisée en ce que les côtés extérieurs du moyeu (1) adjacents au voile (3) sont coniques, le point de rencontre ($P_1$) des génératrices rectilignes ($Z1^*$,$Z1^{**}$) de ces côtés extérieurs définissant la racine ($P_1$) du voile (3) sur le moyeu (1).

5. Roue de véhicule ferroviaire suivant l'une des revendications 1 à 4, caractérisée en ce que les côtés extérieurs de la jante adjacents au voile (3) sont coniques, le point de rencontre des génératrices rectilignes de ces côtés extérieurs définissant la racine ($P_2$) du voile sur la jante (2).

6. Roue de véhicule ferroviaire suivant l'une des revendications 1 à 5, caractérisée en ce que le voile (3) possède sa plus petite épaisseur dans la région comprise entre 2/3 et 4/5 de la distance (C) de sa racine ($P_1$) sur le moyeu (1).

7. Roue de véhicule ferroviaire suivant la revendication 6, caractérisée en ce que la distance (C) est égale à $1,67 \times D$: LD X B , où D est la distance à l'axe (RA) de la roue de la racine $P_2$ du voile (3) sur la jante (2), B est la distance des racines ($P_1$, $P_2$) du voile (3), et LD est le diamètre du cercle de roulement.

8. Roue de véhicule ferroviaire suivant l'une des revendications 1 à 7, caractérisée en ce que la distance axiale (A)des génératrices rectilignes ($Z3^*$, $Z3^{**}$) des côtés extérieurs du voile (3) au niveau de la racine ($P_1$) du moyeu (1) est définie par la formule $A \# 15 + 8,5 (f_D + f_F)$ , avec les coefficients de correction $f_D = LD : 920$ pour le diamètre de roulement LD et $f_F = Q : 500 + Y : 120$ pour la force (Q) exercée sur la roue (charge axiale sur l'essieu) et la force (Y) exercé sur le rail (force axiale s'exerçant sur le boudin).

9. Roue de véhicule ferroviaire suivant l'une des revendications 1 à 8, caractérisée en ce que, côté voile, la région de transition du moyeu (1) et/ou de la jante (2) dans le voile (3) s'étend sur une largeur radiale E, F = 0,35 B du voile (3), mesurée à partir de la racine correspondante ($P_1$, $P_2$) du voile (3), avec une distance (B) des racines ($P_1$, $P_2$) du voile (3).

10. Roue de véhicule ferroviaire suivant l'une des revendications 1 à 9, caractérisée en ce que, côté moyen, la région de transition du voile (3) dans le moyeu possède un rayon de courbure $G = 1,25$ à $2,5 A$ , où A est à distance des génératrices rectilignes ($Z3^*$,$Z3^{**}$) à l'emplacement de la racine ($P_1$).

11. Roue de véhicule ferroviaire suivant l'une des revendications 1 à 10, caractérisée en ce que, côté jante, la région de transition du voile (3) dans la jante (2) possède un rayon de courbure $H = 0,75$ à $2,0 A$ , où A est à distance des génératrices rectilignes ($Z3^*$,$Z3^{**}$) à l'emplacement de la racine ($P_1$).

12. Roue de véhicule ferroviaire suivant les revendications 1 et 9 et éventuellement suivant une ou plusieurs des revendications 2 à 8, 10, 11, caractérisée en ce que, côté voile, la région de transition du voile (3) dans le moyeu (1) satisfait à la fonction suivante:

$$Y_1 = E(2,292.10^{-10} X^5_1 - 4,229.10^{-8} X^4_1 + 2,930.10^{-6} X^1_3 - 8,646.10^{-5} X^2_1 + 1,070.10^{-3} X_2).$$

13. Roue de véhicule ferroviaire suivant les revendications 1 et 9 et éventuellement une ou plusieurs des revendications 2 à 8, 10 à 12, caractérisée en ce que, côté voile, la région de transition du voile (3) dans la jante (2) satisfait à la fonction suivante:

$$Y_2 = F(4{,}870.10^{-10} X^5_2 - 9{,}292.10^{-8} X^4_2 + 6{,}229.10^{-6} X^3_2 - 1{,}561.10^{-4} X^2_2 + 1{,}656.10^{-3} X_2).$$

Figur 1

Figur 2

Figur 3

Figur 4

Figur 5

F

$X_2$
$Y_2$

Figur 6